# EUROPEAN PATENT APPLICATION

(11) **EP 2 184 483 A1**
(43) Date of publication of application: **12.05.2010**
(21) Application number: 07800870.3
(22) Date of filing: 05.09.2007
(51) Int. Cl.: F03D 3/00, F03D 7/06

(54) **A LARGE SIZED SAFE WINDMILL WITH HIGH EFFICIENCY**

(71) Applicant: Environmental Technologies LLC, New York, NY 10016 (US)
(72) Inventor: LEU, Hsech-Pen, Chung-Ching S. Rd. Taipei, Taiwan (CN)
(74) Representative: Maughan, Sophie Louise
(86) International application number: PCT/CN2007/002653
(87) International publication number: WO 2009/030070

(57) **Abstract**

A large sized safe windmill with high efficiency is made up of plural vane-assemblies. Each assembly includes an axle center (2) that connecting the adjacent vane -assemblies by the connectors (21) for transferring power on the ends of the center. Then the power is finally transferred to the generator (82) that generating electricity at the bottom of the windmill. There are plural blade-assemblies extend from the axle center. The vane blade (1) has an extending plane (11) that bending relative to the outside of the axle center, and the extending plane is angled with the blade about 18∼20°. There are rotating axes (13,14) controlling the rotation of plurality of vane blades both on the upside and on the underside thereof. There are horizontal protective shafts (15,16) around the axes and vertical connecting shafts (17) between the vane blades. The vertical connecting shafts transfer power from the blades to the horizontal protective shafts, and thereafter the power concentrates to the axle center. A dogvane (4) and a wind-speed switch (6) are set on top of the windmill, which vary the rotation of the vane blades by means of the changing the direction and degree of the wind.

## Description

### The Art

The present invention relates to a large, safe, highly-efficient windmill. In particular, it relates to a windmill structure that allows increases in windmill size to capture large amounts of wind power for the generation of electricity, with the result that investment costs decline and power generation profits increase, while windpower capture remains safe and long-lasting.

### Background Art

The conventional art is as described in "A Windmill" (Chinese patent ZL 96120092.8, hereinafter referred to as the "Reference Invention"). The art of the Reference Invention lies in solving such conventional windpower system defects as "unstable energy output," "insufficient safety," and "higher cost." Therefore, the Reference Invention employs a plurality of small-area blade assemblies to collect the wind energy of many blades and concentrate it in a central axle. In addition, destructive factors of the windmill system, such as its weight and its shaking, are evenly distributed across the many blades to avoid the damage that results from the concentration of stress on one point. Furthermore, the Reference Invention adjusts the windmill blades so that their windward surfaces are vertical, thereby maximizing the windward area. It adjusts windmill blades that are not facing the wind to make them horizontal and thereby minimizes their resistance. The above-described structure, further complemented by many designs to protect against strong wind and snow accumulations, constitutes the improved windmill structure of the Reference Invention.

However, the design of the Reference Invention is still imperfect. It still has a number of deficiencies that necessitate further improvements. First of all, though the frame of the Reference Invention has a steel beam and column design, it is constrained by the effects of the rotating faces of the windmill blades and is still structurally loose. In particular, in windmills of increased size, when the windmill blades are built to a certain height, their own weight, in addition to the effects of windpower, causes instability of the frame structure and increases the probability of its becoming damaged. Furthermore, the blade design of the Reference Invention is still the traditional design and is unable to effectively concentrate windpower, but allows the windpower to be dispersed everywhere and thereby wastes energy. In addition, the Reference Invention has an inappropriate drive mechanism design in which all blade rotation is controlled from the center outwards. Thus, when larger windmills are set up, the farther out the windmill blades are, the more difficult it becomes to drive them. Furthermore, the windmill blades of the Reference Invention are not properly secured. As a result, when winds are relatively intense, the blades are likely to shake or manifest other undesirable phenomena, thereby diminishing windmill energy efficiency and constituting an obstacle to the building of larger windmills.

Thus, it is clear that the Reference Invention described above and other conventional art have deficiencies that necessitate improvement. In view of the above deficiencies, this inventor set about making improvements and eventually developed the large, safe, highly-efficient windmill put forward by the present application.

### Contents of the Invention

The main object of the present invention is to provide a large, safe, highly-efficient windmill, which would allow increased windmill size, reduce investment costs, and increase power generation profits.

Another object of the present invention is to provide a large, safe, highly-efficient windmill that would greatly increase the safety of windmill systems and reduce the demand for personnel and materials.

A large, safe, highly-efficient windmill which can achieve one of the objects described above comprises, on the whole, a plurality of fan vane assemblies stacked on top of each other. Each fan vane assembly comprises a fan vane axle center. At the two ends of this axle are connectors connecting to two fan vane assemblies, above and below, and transmitting motive power, ultimately, to the generator at the base, which generates electric power. Extending from these connectors are vertical H-shaped columns or H-shaped crossbeams. In addition, at the base of the windmill, where there are no fan vane assemblies, there are reinforcing vertical columns, and there is a roof at the top of the frame to prevent the accumulation of snow on the blades. Furthermore, a plurality of blade assemblies extends in two directions from the fan vane axle center. The blades have a curved extension plane at the distal end from the fan vane axle center, such that the extension plane is at an 18-20 degree angle relative to the blade. A rotating shaft is provided above and below the fan vane assembly. Said rotating shaft is equipped with a drive motor, which enables the rotating shaft to control the rotation of a plurality of blades. The rotating shafts are externally provided with horizontal protective rods, and vertical connecting rods are provided between upper and lower pluralities of blades. The vertical connecting rods concentrate the motive power of the blades to the upper and lower horizontal protective rods so as to concentrate the wind energy of the fan vane assemblies to the fan vane axle center. In addition, a wind-direction vane is provided on top of the windmill. This wind-direction vane is connected to a wind-speed switch. Depending on variations in wind direction or wind force, it can change the rotation of the blades to obtain optimal wind energy efficiency.

### Description of the Drawings

Please refer below to the detailed descriptions of the preferred embodiments of the present invention and to the attached drawings for a better understanding of the technical contents of the present invention and to the efficacy of its objects. The drawings relating to the embodiments are:
FIG. 1 is a three-dimensional drawing of the present invention.
FIG. 2 is a side view of the present invention.
FIG. 3 is a structural diagram of a fan vane assembly of the present invention.
FIG. 3A is a structural diagram of a wind-direction vane of the present invention.
FIG. 4 is a diagram of a windmill blade rotation control structure of the present invention.
FIG. 5 is a diagram of a windmill blade transmission and safety structure of the present invention.
FIG. 6 is a schematic diagram of blade lift in the present invention.

### Explanation of Symbols

| | |
|---|---|
| 1 Blade | 12 Spinning axle |
| 13, 14 Rotating shaft | 15, 16 Horizontal protective rod |
| 17 Vertical connecting rod | 18 Projection |
| 2 Fan vane axle center | 21 Connector |
| 22 Horizontal rotating shaft | 23, 24 Rotating disk |
| 25 Cover | |
| 31, 32 Drive motor | 33, 34 Relay |
| 4 Wind-direction vane | 41 Fan-shaped controller |
| 42 Microswitch | 51 H-shaped column |
| 52 H-shaped crossbeam | 53 Vertical column |
| 54 Horizontal beam | 55 Roof |
| 56 Supporting column | 6 Wind-speed switch |
| 61 Fan-shaped control wheel | 62 Microswitch |
| 71, 72, 73, 74, 75 Push rod | |
| 81 Gear box | 82 Generator |
| A Wind direction | F Escaping wind energy |
| P Traditional windpower generator | |
| P1 Optimal curved surface | |
| R Blade movement direction | |

### Optimal Embodiments

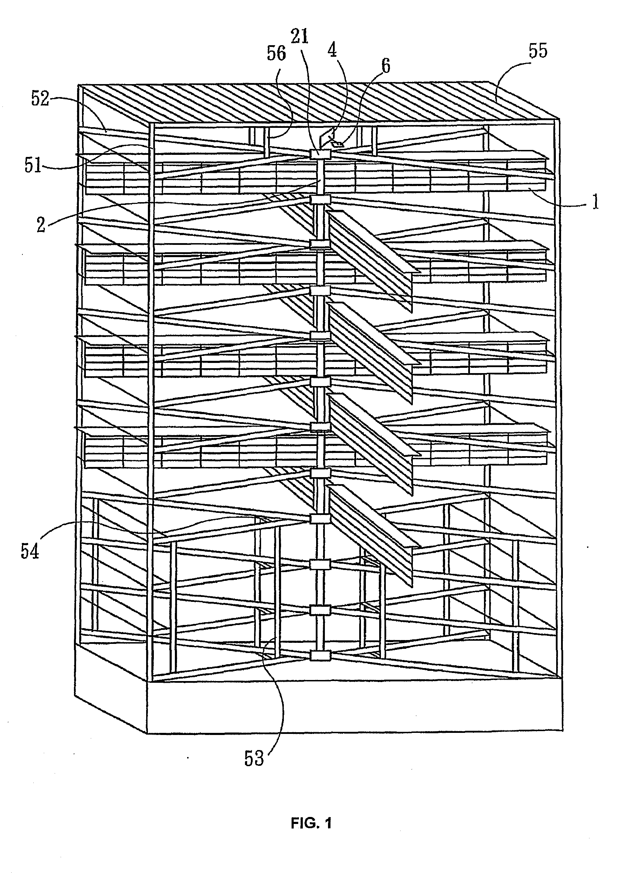

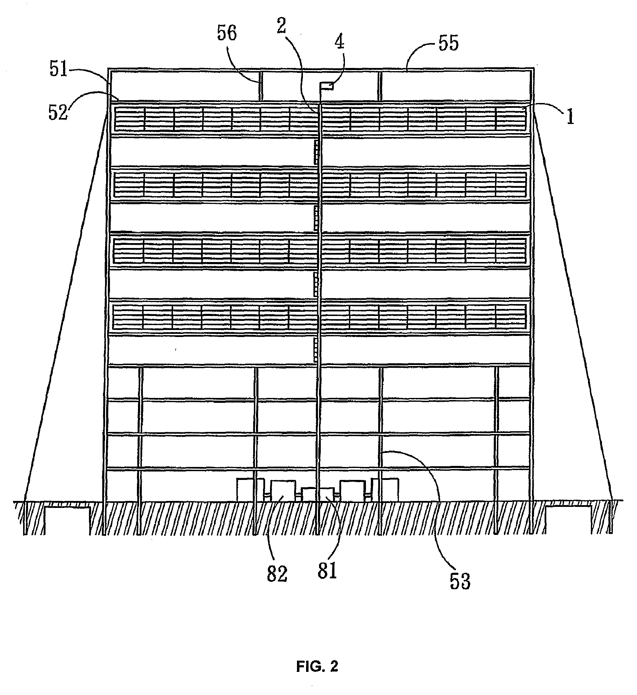

Please refer to FIGS. 1 through 3. The present invention provides a large, safe, highly-efficient windmill. Its "expandable" structure entails stacking one layer of many blades 1 on top of another in a process of incremental expansion. The windward area is increased by increasing the number of blades 1. Or the windward area is increased by increasing the diameter of the blade 1 assemblies from the fan vane axle center 2 that is vertically disposed in the center of the structure towards two sides, adding blades 1 one section at a time on the two sides. The cumulative result of these approaches is huge areas (such as 10,000 square meters) that concentrate wind energy absorbed from the blade 1 assemblies onto the same vertical fan vane axle center 2, which extends down to the ground-level gear box 81 that drives the generator 82 that generates electricity. When the above-described huge-area structure rotates, the shaking and vibrations which it generates are evenly diffused over the entire structure and are not concentrated at one point, where they would constitute a destructive force. Therefore, it is very safe to increase the size of the windmill, and the relationship between the upper-level fan vane axle center 2 and the lower-level fan vane axle center 2 is limited to transmitting torque and speed. The weight of the blades 1 of the upper layer will not press on down on the blades 1 of the lower layer and thus become a load on the lower-layer fan vane axle center 2.

A detailed description follows. The windmill comprises a plurality of fan vane assemblies. Each fan vane assembly comprises the above-described fan vane axle center 2. At each of the two ends of the fan vane axle center 2 is a connector 21, which enables the upper and lower fan vane assemblies to connect and transmit motive power. In addition, a plurality of blade 1 assemblies extends to two sides from the fan vane axle center 2. The blade 1 assembly is composed of a large number of blades 1. Above and below the fan vane assembly are rotating shafts 13 and 14, respectively. The rotating shafts 13 and 14 are equipped with drive motors 31 and 32, respectively, which enable the rotating shafts 13 and 14 to control the rotation of a plurality of blades 1. The rotating shafts 13 and 14 are externally provided with horizontal protective rods 15 and 16, respectively, that concentrate the wind energy from the blade assembles onto the fan vane axle
center 2. In addition, there is a wind wind-direction vane 4 on top of the windmill. This wind wind-direction vane 4 can control the rotation of the blades 2.

The blades 1 are supported by an expandable safety structure, which, as shown in FIG. 1, further comprises a frame. This frame extends from the connectors as H-shaped columns 51 or H-shaped crossbeams 52. The basic structure consists of four H-shaped columns 51 whose heights are increased a section at a time from the ground up and H-shaped crossbeams 52 extending from the connectors 21 and joined to the H-shaped columns.

To strengthen the structure, the H-shaped columns 51 that serve as the structural foundation of the frame base are reinforced where there are no fan vane assemblies with vertical columns 53 and with horizontal beams 54 that interconnect horizontally with the vertical columns 53. In addition, the top of the frame is provided with supporting columns 56 and with a roof 55 to prevent snow accumulation on the blades.

The above-described generator 82 can be a generating set consisting of multiple generators driven by a gear box 81 that is axially provided on the bottom fan vane axle center 2. This gear box 81, depending on the intensity of the wind force, transmits motive power to any one or simultaneously to multiple generators 82, which generate electricity.

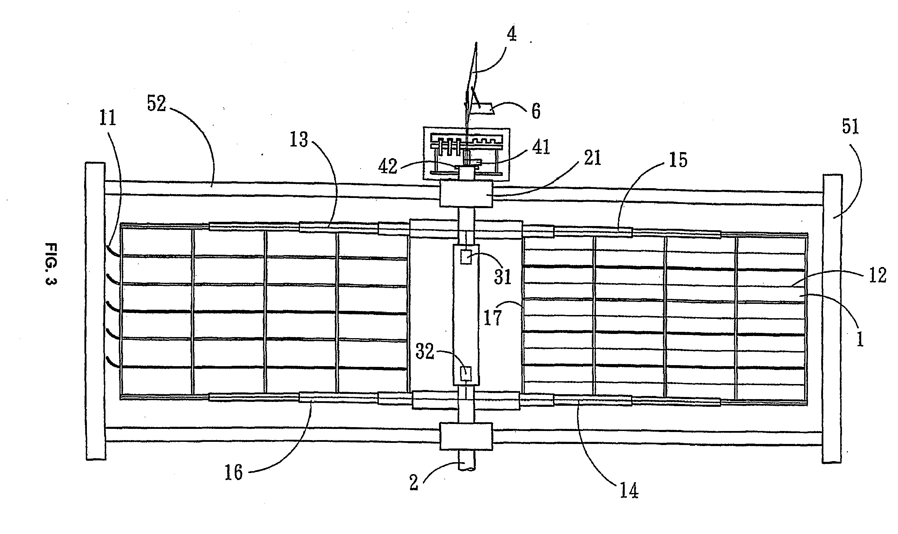

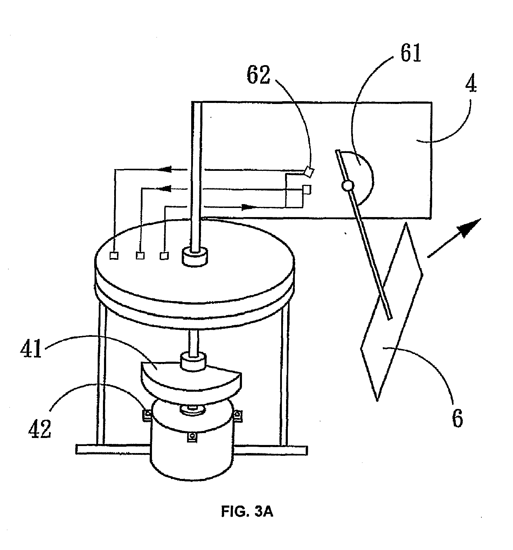

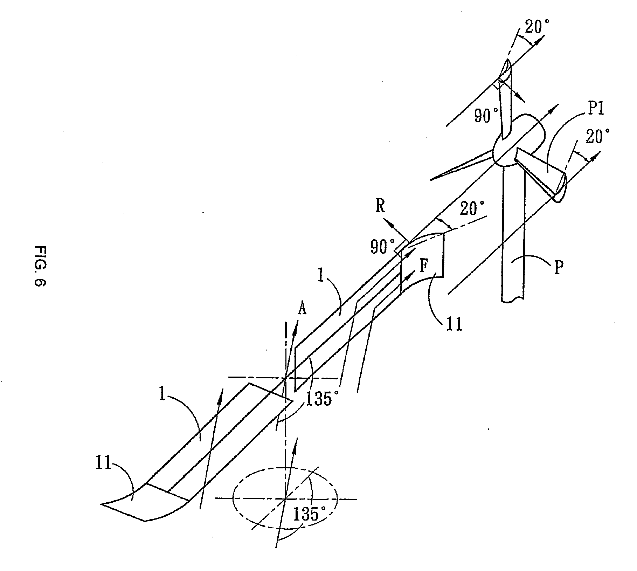

In addition, as shown in FIG. 3, on the left and right sides each section of the vertical fan vane axle center 2 that rotates in the structure formed from H-shaped columns 51 and H-shaped crossbeams 52 are fastened left-right symmetrical blade 1 assembly units. The left and right blades 1 are perpendicular to each other as shown in FIG. 6 . The upper and lower horizontal protective rods 15 and 16 that support each fan vane assembly stabilize the blade 1 assemblies.

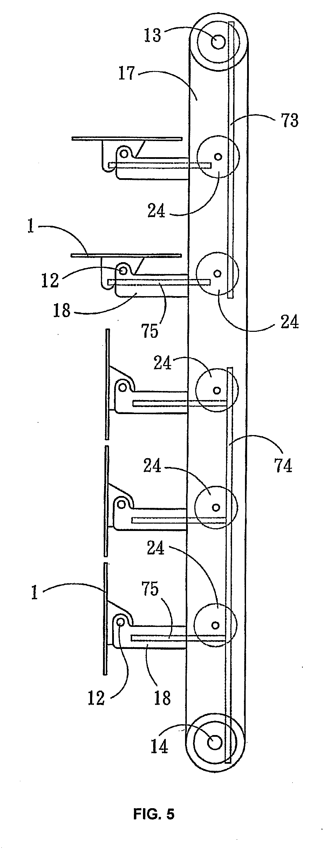

The diameter of the blades 1 is increased incrementally by adding blades 1. Its safety structure includes:
(1) A vertical connecting rod 17 is provided between the upper and lower horizontal protective rods 15 and 16 in order to transmit the wind energy received by the blades 1.
(2) As shown in FIG. 5, each vertical connecting rod 17 has several projections 18 which are equal in number to the blades (e.g., five blades). The blades 1 are axially mounted at the ends of the projections 18.
(3) The projections 18 are connected to the spinning axle 12 of the blades 1 at the front end. When the blades 1 are horizontal, the horizontal part of this projection 18 can support the back of the blade 1 to stabilize the blade 1 in a horizontal position. When the blade 1 is vertical, the vertical part of the projection 18 likewise can support the vertical part of the blade 1 and prevent vibrations.

As shown through the analysis above, after each small blade 1 absorbs wind energy, the generated force is transmitted from the two ends of the blade 1 and then from the vertical connecting rod 17 to the upper and lower protective rods 15 and 16.These upper and lower protective rods 15 and 16 collect the force generated by the blade 1 assembly and concentrate it onto the fan vane axle center 2. Because the small blades 1 on the left and right are responsible only for collecting wind energy, the blades 1 do not affect each other. That is, the blades 1 near the fan vane axle center 2 are not responsible for transmitting wind energy collected by the outside blades 1. Therefore, the blade 1 assembly can be increased in size, and the overall structure is safer. In addition, a cover 25 is installed over the top blade 1 assembly. This cover 25 provides protection from snow accumulation so that the blades can keep moving.

In addition, as shown in FIGS. 3 and 3A, the wind-direction vane 4 is connected to a fan-shaped controller 41, and microswitches 42 are provided were blade 1 assemblies are disposed in the rotation path of the fan-shaped controller 41. These microswitches 42 can be driven by a contact sensor or an optical sensor. In the present embodiment, there are four microswitches 42 whose positions correspond to the cross-shaped blade 1 assembly for precise control of blade 1 rotation. When the wind-direction vane 4 rotates with the wind, the fan-shaped controller 41 drives the microswitches 42 at the corresponding positions. These microswitches 42 activate relays 33 and 34, which control the drive motors 31 and 32, which adjust the rotation of the blades 1 so that the blade 1 assembly with the windward face is vertical and on the other side is horizontal.

The wind-direction vane 4 is also connected to a wind-speed switch 6. The wind-speed switch 6 is connected to a fan-shaped control wheel 61. A plurality of microswitches 62 are provided along the rotation path of the fan-shaped control wheel 61. When wind force increases, the fan-shaped control wheel 62 drives the appropriately-positioned microswitches 62. The microswitches 62 activate the relay 33 to effect reverse-rotation control of the drive motor 31 and thereby adjust the rotation of the blade 1. The drive motor 32 remains unchanged, with the result that some of the blades 1 of the windward-facing blade 1 assembly are horizontal. This reduces the area of the windward surface of the blades 1 and keeps the rotation speed of the fan vane axle center 2 within a safe range.

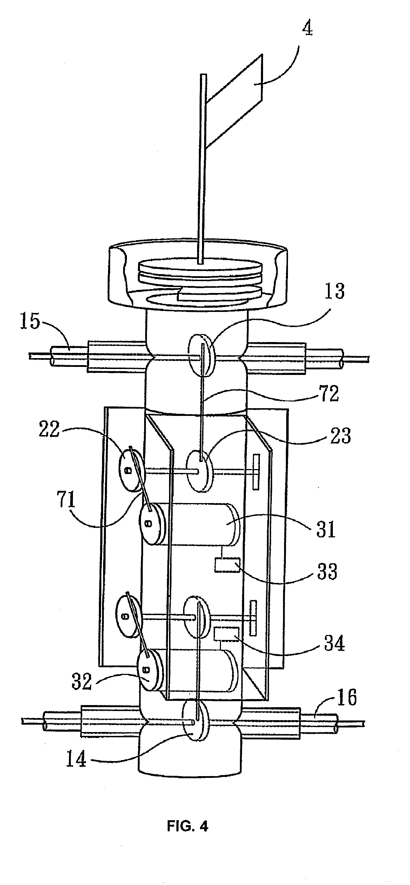

As further shown in FIGS. 3 and 4, the top and bottom of the blade 2 assembly are controlled by the above-described drive motors 31 and 32, respectively, such that each drive motor 31 and 32 controls a different quantity of blades. For example, the upper drive motor 31 in the present embodiment controls the rotation of two sets of blades, and the lower drive motor 32 controls the rotation of three sets of blades. In addition, the upper and lower drive motors 31 and 32 can effect control separately. To take the above drive motor 31 as an example, the drive motor 31, by means of the push rod 71, pushes the horizontal rotating shaft 22 (provided within the fan vane axle center 2) 90 degrees. This horizontal rotating shaft 22 drives a rotating disk 23, causing this rotating disk 23, by means of a push rod 72, to push the rotating shaft 13 90 degrees in the previously described protective rod 15.

As further shown in FIG. 5, the rotating shafts 13 and 14, by means of the push rods 73 and 74, push several rotating disks 24 secured on the two vertical connecting rods 17 90 degrees. The rotating disks 24, also by means of push rods 75, push the rotation of the blades 1 90 degrees. Therefore, two rotating shafts 13 and 14 (upper and lower) separately control the rotation of different quantities of blades 1, so that the windward-facing blade 1 assembly is vertical, and the other side is horizontal.

Please refer to FIG. 6. The windmill blades 1 of the present invention have a high-efficiency structure. In addition to the fact that the above-described blades 1 are vertical and absorb wind energy when moving with the wind and horizontal and reduce wind resistance when without a windward surface, the blades 1 have a curved extension surface 11 at the distal end from the fan vane axle center 2. This extension surface 11 has an 18-20 degree angle relative to the blade 1. This enables the extension surface 11 to generate additional force and greatly increase wind energy absorption effectiveness of the blades. Please also refer to FIG. 1. The cross-pattern (top-view) of the blade 1 assembly of the present invention is divided into exactly 4 units. When the blades 1 of a unit are perpendicular (90 degrees) to the wind direction A and are receiving wind energy and rotating backwards as shown in FIG. 6, the escaping wind energy F flows across the extension surface 11 which is at an 18-20 degree angle at the distal end of the blade 1. At this point, the escaping wind energy F can effectively strike against the extension surface 11 and generate a backward rotation force. This force is called "lift" in aerodynamics, and the direction R of blade movement is at a 90 degree angle to the wind direction A.

The lift that can be generated by this lift-generating extension surface 11 is entirely the same as the optimal curve surface P1 relative to wind direction A in a traditional windpower generator P. The following is an analysis of the above: When each blade 1 assembly is at a 90 degree angle to the wind direction A and moves backwards, the vertical windward surface gradually decreases while the escaping wind energy F escaping across the extension surface 11 increases. We can perform analysis and calculations based on an angle of 135 degrees relative to wind direction A. This gives us the equations below:
a. W = Total wind energy of the windmill (windmill height x windmill width)
b. % W = Wind energy of one windmill blade 1 assembly. Since there are four unit assemblies, it is one-fourth of W.
c. % W x cos 45 degrees = 0.1767767 W (escaped wind energy F).
d. Given that the above-described escaped energy F = 0.1767767W, and the full quantity passes over the lift-generating extension surface 11, the following forces can be generated:
   (1) Lift, the maximum lift that can be generated from an extension surface 11 having an 18-20 degree angle relative to the wind direction A; its coefficient is 1.8.
   (2) This force is generated by the extension surface 11 at the distal end of the blade 1. Compared to this force evenly distributed over the entire blade 1 unit (the blade 1 closest to the rotating shaft center to the blade 1 furthest out), it can double (multiply by 2) the force.
   (3) When the above-described escaped wind energy F passes over the extension surface 11, the force that it generates can have a maximum value of 0.1767767W x 1.8 x 2 = 0.63639612W.

When a blade 1 assembly in the above-described second quadrant is at a 135 degree angle relative to the wind direction A, there will be a blade 1 assembly at a 45 degree angle to the wind direction A in the first quadrant. Its wind energy is ¼ x sin 45 degrees = 0.1767767W. The total wind energy generated by the first and second quadrant blade assembly units is 0.81317282W, which exceeds the 0.593W maximum for wind energy absorbed by a traditional wind power generator P.

The above detailed description is a concrete description of a feasible embodiment of the present invention. The purpose of this embodiment is not to restrict the present invention. All equivalent embodiments or modifications that do not depart from the art of the present invention should be included within the present invention.

### Applicability to Industry

The present invention provides a large, safe, high-efficiency windmill that increases windmill size so as to capture a large amount of wind power for the generation of electricity. It lowers investment cost, and increases power generation profits while maintaining wind power safely over a long period of time. It can be effectively applied to wind energy power generation technologies.

## Claims

1. A large, safe, highly-efficient windmill, comprising a plurality of fan vane assemblies stacked on top of each other; each fan vane assembly comprising a fan vane axle center, the two ends of said fan vane axle center having connectors connecting upper and lower fan vane assemblies to transmit motive power; and there being a plurality of blade assemblies extending from two sides of the fan vane axle center; there being provided one rotating shaft above and one below said fan vane assembly, said rotating shaft being equipped with a drive motor enabling said rotating shaft to control the rotation of a plurality of blades; said rotating shaft being externally provided with a horizontal protective rod for concentrating wind energy from the blade assembly onto the fan vane axle center; and a wind-direction vane being provided on top of said windmill, said wind-direction vane being capable of controlling the rotation of the fan vanes; **characterized by** the fact that:
said blades have a curved extension surface on the end distal from the fan vane axle center, said extension surface being at an 18-20 degree angle relative to the blade.

2. The large, safe, highly-efficient windmill as described in claim 1, **characterized by** the fact that: it further comprises:
a frame, said frame extending from the connectors as vertical H-shaped columns or H-shaped crossbeams, and the base of said frame having reinforcing vertical columns and horizontal beams where there are no fan vane assemblies, and the top of said frame having a roof to prevent the accumulation of snow on the blades.

3. The large, safe, highly-efficient windmill as described in claim 1, **characterized by** the fact that: it further comprises:
a generating set, comprising a plurality of generators and driven by a gear box pivotally mounted at the lowest fan vane axle center, said gear box, depending on the intensity of the wind, transmitting motive power to any one generator or simultaneously to multiple generators, which generate electricity.

4. The large, safe, highly-efficient windmill as described in claim 1, **characterized by** the fact that:
a vertical connecting rod is provided between said pluralities of upper and lower blades, said vertical connecting rod concentrating motive power from the blades to upper and lower protective rods so as to concentrate wind power onto the fan vane center axle.

5. The large, safe, highly-efficient windmill as described in claim 4, **characterized by** the fact that:
said vertical connecting rod is provided with a plurality of projections, said blades being axially mounted at the ends of the projections such that when said blades are rotated vertically or horizontally, all of said blade ends can be secured by resting on the projections.

6. The large, safe, highly-efficient windmill as described in claim 4, **characterized by** the fact that:
said vertical connecting rods are internally provided with a plurality of disks, said disks directly or indirectly being connected to said upper or lower rotating shafts by push rods and causing each disk to extend, by another push rod, to the corresponding blade assembly, enabling said rotating shaft to likewise¹ drive the rotation of a plurality of blades.

7. The large, safe, highly-efficient windmill as described in claim 1, **characterized by** the fact that:
said wind-direction vane is connected to a fan-shaped controller, and there being microswitches provided where the blade assemblies are disposed in the rotation path of the fan-shaped controller; when the wind-direction vane rotates in the direction of the wind, said fan-shaped controller makes contact with appropriately-positioned microswitches, said microswitches activating relays controlling drive motors to adjust the rotation of the blades.

8. The large, safe, highly-efficient windmill as described in claim 1, **characterized by** the fact that:
said wind-direction vane is connected to a wind-speed switch, said wind-speed switch being connected to a fan-shaped control disk, there being a plurality of microswitches in the rotation path of said fan-shaped control disk; when wind intensity changes, said fan-shaped controller can make contact with the appropriately-positioned microswitches, said microswitches activating relays controlling the drive motors to adjust the rotation of the blades.
